# EUROPEAN PATENT APPLICATION

(11) **EP 3 289 997 A1**
(43) Date of publication of application: **07.03.2018**
(21) Application number: 16186159.6
(22) Date of filing: 29.08.2016
(51) Int. Cl.: A61C 8/00

(54) **CONNECTOR-ADAPTER DEVICE FOR ROUND-HEAD ATTACHMENTS OF DENTAL PROSTHESES**

(71) Applicant: Kulzer GmbH, 63450 Hanau (DE)
(72) Inventor: PIASINI, Bruno, 23020 Montagna In Valtellina - Sondrio (IT)
(74) Representative: Martegani, Franco

(57) **Abstract**

A connector-adapter device for dental prostheses on an implant (2,25) having a neck (14) provided with a round head (3,20) for being fixed to a superstructure (1) provided with a channel (15) for housing a screw (8), said device comprising a portion (6) suitable for being engaged on said superstructure (1) and an attachment portion (9) on said round head (3,20).

With respect to the known round-body connection systems for dental prostheses, the device of the present invention offers the advantage of allowing the same round-head attachments already present in the mouth and used for fixing a movable prosthesis, to be exploited, in order to substitute the same movable prosthesis with a prosthesis of the fixed type and allow the possibility of having an angled axis of the screw channel with respect to the axis of the implant.

## Description

The present invention relates to a connector-adapter device for round-head attachments of dental prostheses.

### Field of the invention

The field of the invention relates to dental prostheses, wherein, for example, a superstructure is fixed to the implant fitted in the patient's mouth. In particular, the invention relates to the connections between the superstructure and the implant, wherein the use of rounded, spherical and similar attachments is envisaged, in turn fixed to the implant and on which movable prostheses are normally fitted.

### Background of the invention

Alongside the advantage of allowing a rapid substitution or removal for cleaning, movable prostheses have the drawback, however, of having a certain instability, often annoying and irritating for the patient, above all in the presence of chewing with high loads or destabilizing diseases that have arisen in the meantime.

The solutions currently in use do not allow the substitution of a movable prosthesis, which has proved to be unsatisfactory, unless the whole implant is changed or, in some cases, unless the components already integrated in the gum are substituted.

### Summary of the invention

The main objective of the present invention is to provide a connector-adapter device for dental prostheses which allows the use of the same round-head attachments, already present in the mouth for fixing movable prostheses, in order to replace the same movable prostheses with a fixed prosthesis, or using new round-head implants for fitting a prosthesis of the fixed type.

A further objective of the invention is to provide a connector-adapter device of the type mentioned above, which does not jeopardize the possibility of re-fitting a movable prosthesis in the mouth after its substitution with an analogous prosthesis of the fixed type.

The invention also has the objective of providing a connector-adapter device which allows the angle of the axis of the screw hole to be selected with respect to the axis of the implant, in order to avoid visible exposure of the hole formed in the superstructure for housing the relative fixing screw to the implant, which would be aesthetically unacceptable.

These and other objectives are achieved by means of the connector-adapter device for dental prostheses of claim 1. Preferred embodiments of the invention are described in the remaining claims.

With respect to the known round-body connection systems for dental prostheses, the device of the present invention offers the advantage of allowing the same round-head attachments already present in the mouth and used for fixing a movable prosthesis, to be exploited, in order to substitute the same movable prosthesis with a prosthesis of the fixed type.

The device according to the invention also has the advantage of not jeopardizing the possibility of re-fitting a movable prosthesis, new or previously used in mouth implants, after its substitution with an analogous fixed prosthesis. The above possibility is particularly advantageous in the case of a temporary use of the movable prosthesis, for example after an operation, to facilitate medications and controls, to be subsequently replaced by a fixed prosthesis.

The device of the invention also has the advantage of allowing the axis angle of the screw hole to be selected, with respect to the axis of the implant, so as to avoid visible exposure of the hole that houses the screw on the superstructure, with a considerable aesthetic improvement of the patient's mouth.

### Brief description of the drawings

These and other objectives, advantages and features are evident from the following description of a preferred embodiment of the device of the present invention, illustrated, as a non-limiting example, in the figures of the enclosed drawings.

In these:
- figure 1 illustrates, in a sectional view, an example of a round-head attachment for movable prostheses according to the known art;
- figure 2 illustrates, in an exploded view, an example of an attachment of a superstructure on a round-head implant and with the supporting surface for the superstructure on the head, with the use of the device of the invention;
- figure 2A illustrates the detail of the device of the invention of figure 2;
- figure 3 illustrates the detail of the assembly of the device of the invention on the round-head implant and with the supporting surface for the superstructure on the head of figure 2;
- figure 3A illustrates the connector-adaptor device of figure 3;
- figure 4 illustrates a sectional view of the attachment of figure 2 in the patient's mouth, in the position of the superstructure assembled on the round-head implant and with the supporting surface for the superstructure on said round head;
- figure 5 illustrates, from below, the detail of the clip-insert of figure 2, on the side of the implant, with a guide of the relative movement of the device of the invention with respect to the axis of the implant;
- figure 6 illustrates a variant of the device of the invention on the round-head implant and with the supporting surface for the superstructure on said head, provided with an example of an anti-rotation system;
- figure 6A illustrates a detail of the anti-rotation system of the device of figure 6;
- figure 7 illustrates the device of figure 6 in section A-A;
- figure 8 illustrates the attachment solution of the device of the invention on the round-head implant and with the supporting surface for the superstructure on said head, on a rounded body having a non-spherical form;
- figure 9 illustrates, in an exploded view, an example of an attachment of a superstructure on a round-head implant and with the supporting surface for the superstructure on the body of the implant, using the device of the invention:
- figure 10 illustrates a section of the attachment of figure 9 in the position of the superstructure assembled on the round-head implant and with the supporting surface for the superstructure on the body of the implant in the patient's mouth; and
- figure 11 illustrates a section of the attachment of figure 9 in the position of the superstructure assembled on the round-head implant and with the supporting surface for the superstructure on the body of the implant in the patient's mouth and with the axis of the screw hole in the device of the invention angled with respect to the axis of the implant.

### Detailed description of the drawings

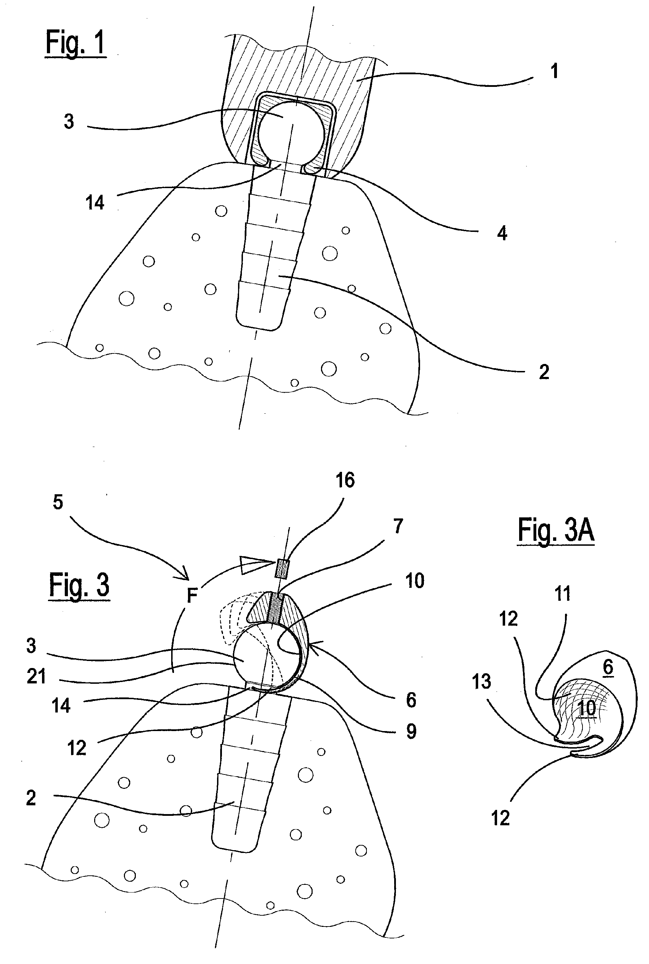

According to the known art illustrated in figure 1, a superstructure 1 is movably fixed to the implant 2 by means of an attachment of the round type, for example a spherical head 3, joined to the implant 2 by means of a neck 14 and which is forcedly engaged inside a corresponding cavity of the superstructure 1, after the interpositioning of a capsule 4 made of an elastomeric material.

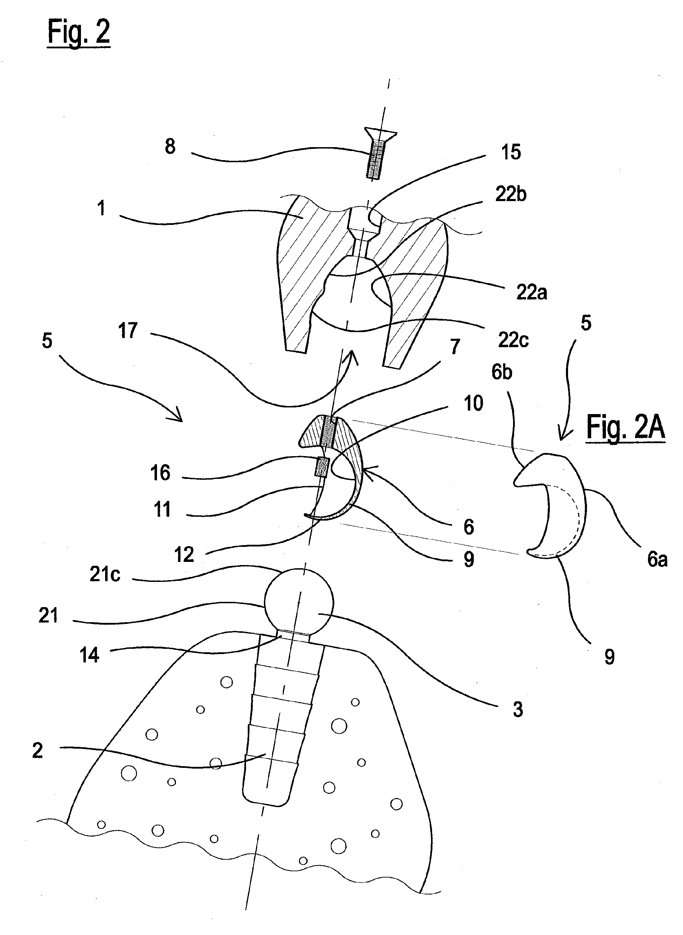

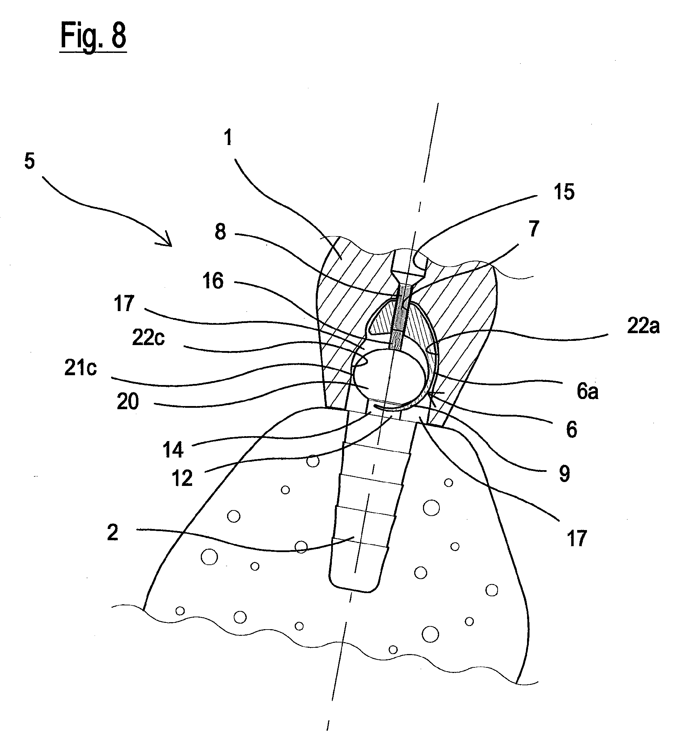

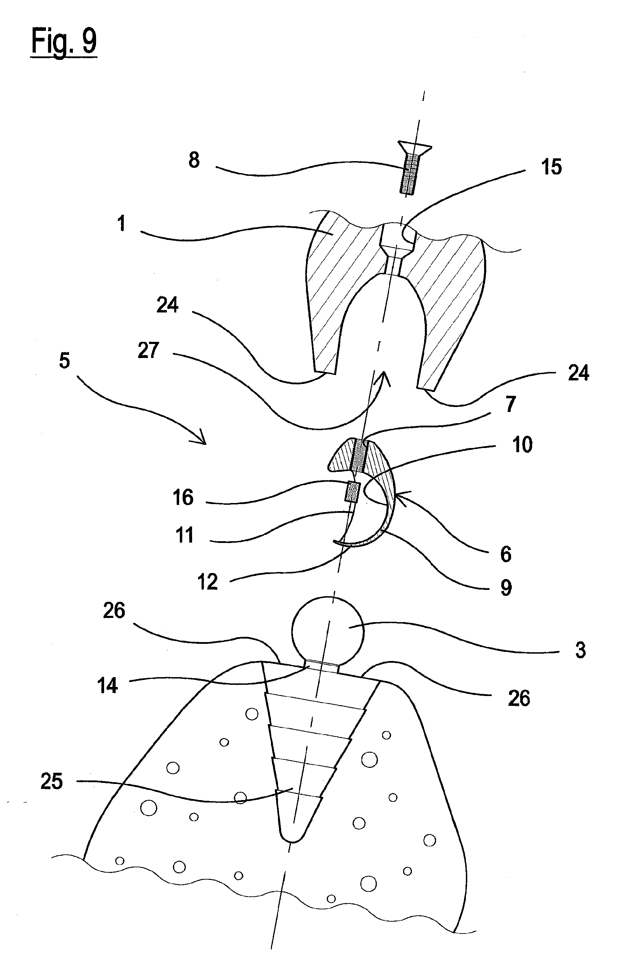

According to the invention, in order to be able to use the same round head 3 of figure 1 or 20 of figure 8, for assembling a fixed prosthesis on the implant 2 of figure 2 or 25 of figure 9, already fitted in the patient's mouth, the connector-adaptor device of the invention is envisaged, as better represented in said figures 2 and 9.

This device is indicated as a whole with 5 and has a first portion 6, on the side of the superstructure 1, provided with the hole 7 which serves for housing the screw shank 8 for fixing the same superstructure onto the implant. The device 5 also comprises a second portion 9, on the side of the implant 2 or 25, which has a rounded cavity 10, provided with an opening 11 for the insertion of the above-mentioned head 3 or 20 inside the same cavity 10.

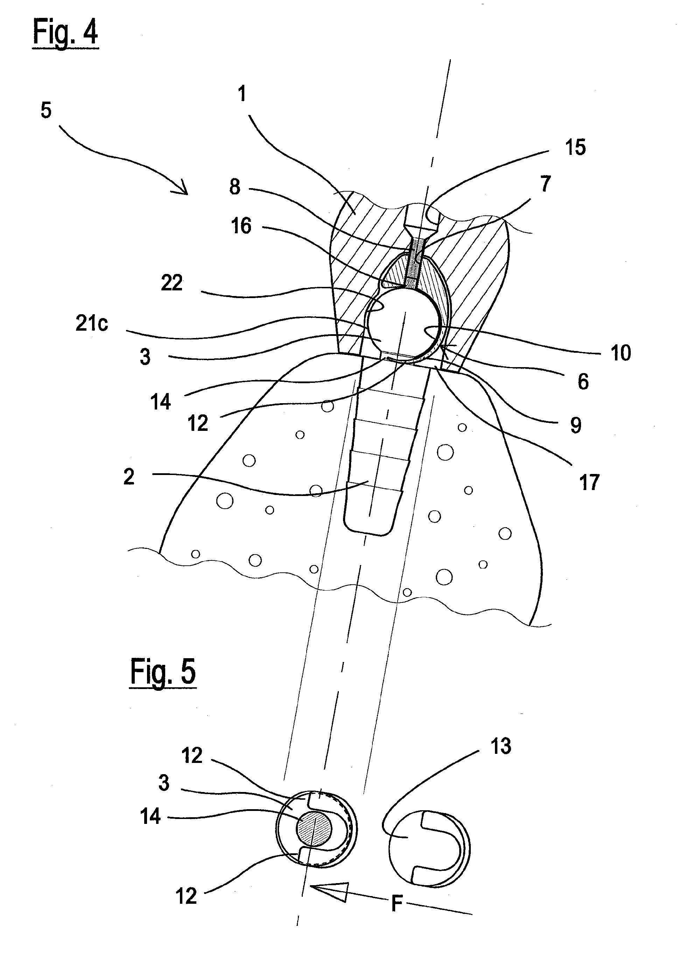

As better illustrated in figures 4, 5 and 10, the above-mentioned portion 9 of the device 5 has a terminal part 12, suitable for being housed between the implant 2 or 25 and the relative round head 3 or 20. Said terminal part 12 is also advantageously provided with an opening 13, inside which the neck 14, connecting the head 3 or 20 to the implant 2 or 25, is inserted, which, by sliding on the neck 14, also allows the possibility of having variable angles of the axis of the device 5 with respect to the axis of the implant 2 or 25. In this way, the above-mentioned terminal part 12 of the device 5 can be fixed on the head 3 or 20 of the implant 2 or 25 by insertion, according to the arrow F of figure 3, of the relative neck 14 into the above-mentioned opening 13 of the same terminal part 12.

The above-mentioned possibility of movement of the device of the invention with respect to the implant, also has the advantage of allowing the selection of the angle of the axis of the hole 7 on the device 5 for the screw shank 8, respecting the alignment, with the axis, of the channel 15 for the insertion of the same screw 8 on the superstructure 1. In this way, the above-mentioned channel 15 can be oriented according to a hidden arrangement or in any case not harmful for the aesthetics of the patient's mouth.

Furthermore, in order to favour the provisional anchoring of the device 5 of the invention on the head 3 or 20 of the implant (figures 2, 3 and 9), at the end of the hole 7, facing the inside of said cavity 10, a protruding insert 16 is advantageously housed, made of an elastomeric material, for example, or a small spring which acts as a fastener or clip that serves to provisionally hold the head 3 or 20 of the implant 2 or 25 inside the cavity 10 of the same device 5, until the complete assembly of the superstructure 1 on the implant.

The above-mentioned movable or sliding coupling of the head 3 or 20 of the implant 2 or 25 in the corresponding cavity 10 of the device of the invention at the moment of insertion into the seat 17 of figure 2 or 27 of figure 9 of the portion 6 of the device 5 inside the superstructure 1, advantageously allows the axis of the hole 7 for the screw 8 to automatically adapt itself to the axis of the seat 17 or 27 which corresponds to the axis of the channel of the screw 15 on the superstructure 1. In this way, the correct alignment is obtained of the axes of the hole 7 on the device 5 and of the channel 15 of the superstructure 1, when positioning the same superstructure on the implant in the patient's mouth. In particular, the alignment described above is obtained by the rotation of the device 5 on the head 3 or 20 of the implant 2 or 25, said rotation being caused by the insertion of the portion 6 of the same device 5 inside its seat 17 or 27 in the superstructure 1.

Said insertion 16 opposes, against these movements, only a retention effort or engagement by friction, so as to gain control of these movements without causing the detachment of the device 5 from the head 3 or 20 of the implant 2 or 25. If, in fact, there are implants 2 or 25 in the patient's mouth, with different axes with respect to the axis of the channel of the screw 15 on the superstructure 1, this automatic adjustment between the axes of the above-mentioned hole 7 on the device 5 and said channel 15 on the superstructure 1, allows the relative assembly between these parts.

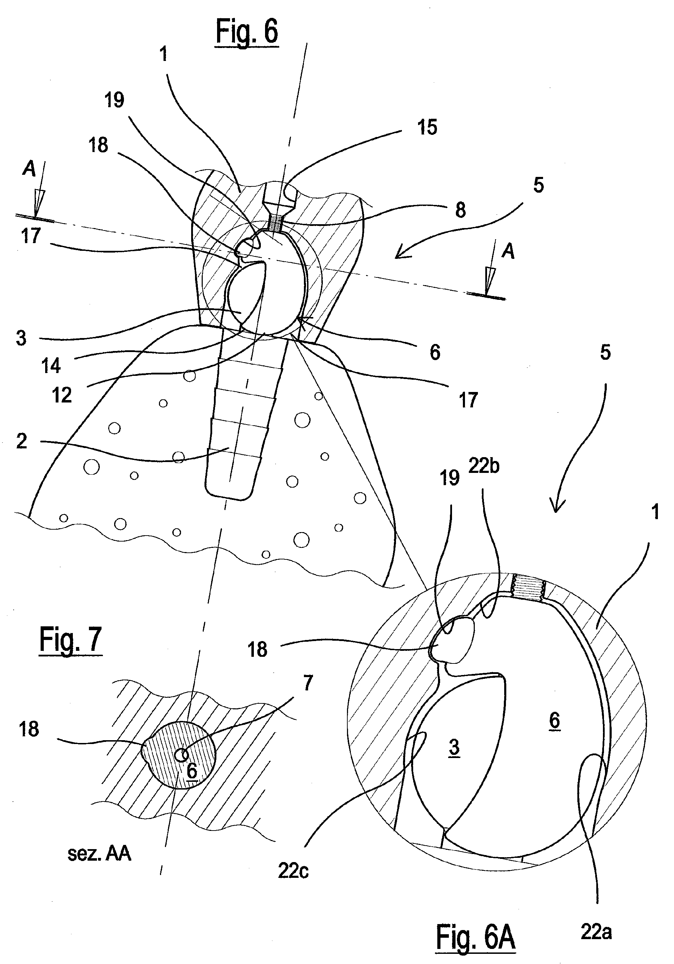

In order to avoid the transmission of the relative rotation between the screw 8 and the device 5 of the invention, the protrusion 18 illustrated in figures 6, 6A and 7, is envisaged on the portion 6 of the latter, suitable for being engaged, in turn, inside a corresponding cavity 19 present on said seat 17 of figure 6 or 27 of figure 9 of the superstructure 1. In substitution of said protrusion 18, and the relative cavity 19, the coupling portion 6 of the device 5 with the superstructure 1 may no longer be shaped with a circular section, but can have an elliptic or other geometrical form, suitable for preventing the transmission of the relative rotation between the screw 8 and the device 5 of the invention (figure 8).

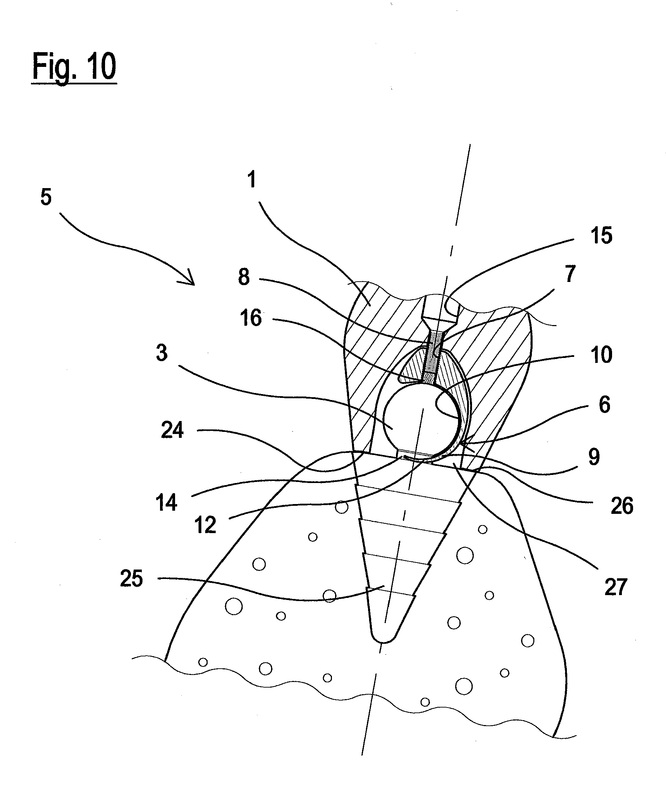

The completion of the assembly of the device 5 on the superstructure 1 is effected by inserting said portion 6 inside a corresponding seat 17 or 27 of the superstructure 1 and subsequently screwing the screw 8 inside the hole 7 of the same device 5 (figures 4 and 10).

In particular, and as better represented in figures 2, 4, 6 and 8, the inner surface 22 of the seat 17 of the superstructure 1, which receives the device 5 of the invention, has a portion of surface 22a which enters into contact with the corresponding portion of surface 6a of the device 5 of figure 2A, a portion of surface 22b that receives the corresponding portion of surface 6b of said device 5 of figure 2A and a portion of surface 22c which rests on the corresponding portion of surface 21c of the surface 21 of the round head 3, 20 of figures 2 and 8.

Furthermore, and as better shown in figures 9, 10 and 11, the superstructure 1 which receives the device 5 of the invention, has a surface 24 that rests on the corresponding surface 26 on the shoulder of the implant 25.

Finally, the fixing between the implant 2 and the superstructure 1 illustrated in figures 2, 4, 6 and 8 is obtained by both contact between the surface 22a of the superstructure 1 illustrated in figures 2, 4, 6 and 8 and the outer surface 6a of the device 5, as illustrated in said figures 2, 4, 6 and 8, and also by contact between the surface 22c of the superstructure 1 and the outer surface 21c of the round head 3, 20.

In the version represented in figures 9, 10 and 11, the fixing between the implant 25 and the superstructure 1 is obtained on the contrary, by the contact between the surface 24 of the superstructure 1 which faces the surface 26 of the body of the implant 25.

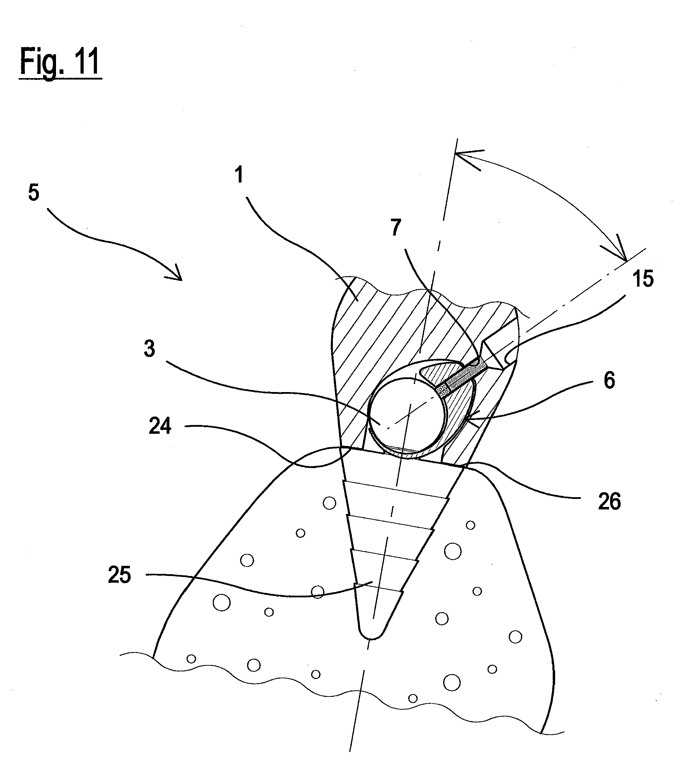

In the variant of figure 11, the device of the invention is applied on an implant 25, with a round head 3 and with the supporting surface 26 for the superstructure 1 on the body of the implant in the patient's mouth and with the axis of the hole 7 of the screw angled with respect to the axis of the implant.

Having thus described some preferred exemplary embodiments of the device of the present invention in accordance with the principles of the present invention, it should be apparent to those skilled in the art that various additional objects and advantages have been attained by the invention and that a variety of modifications can be made within the scope of the present invention, being limited by the following appended claims only.

## Claims

1. A connector-adapter device for dental prostheses on an implant (2,25) having a neck (14) provided with a round head (3,20) for being fixed to a superstructure (1) provided with a channel (15) for housing a screw (8), **characterized in that** it comprises a portion (6) suitable for being engaged on said superstructure (1) and an attachment portion (9) on said round head (3,20).

2. The device according to claim 1, **characterized in that** said portion (9) has a rounded cavity (10) which defines a movable coupling seat between said device (5) and said round head (3,20) of the implant (2,25).

3. The device according to claim 2, **characterized in that** said portion (9) also has a terminal part (12) suitable for being housed between said implant (2,25) and said round head (3,20), the same terminal part (12) having an opening (13) inside which said neck (14) of said head (3,20) is inserted.

4. The device according to claim 3, **characterized in that** said portion (6) comprises a hole (7) for the housing of said screw (8), and also an elastic insert (16) positioned in correspondence with the end of said hole (7) facing the inside of said rounded cavity (10) and assembled protruding inside this cavity.

5. The device according to claim 4, **characterized in that** said cavity (10) has an opening (11) for the insertion of said round head (3,20) inside the same cavity (10).

6. The device according to claim 5, **characterized in that** said portion (6) is shaped for being inserted inside the corresponding seat (17,27) of the superstructure (1), so as to be housed inside the same.

7. The device according to claim 6, **characterized in that** means (18,19) are also envisaged, which are suitable for preventing the relative rotation of said connector (5) with respect to said screw (8).

8. The device according to claim 7, **characterized in that** said opening (13) allows the possibility of movement of the axis of said device (5) with respect to the axis of said implant (2,25).

9. The device according to claim 6, **characterized in that** said portion (6) of the device (5) has portions of surface (6a,6b) and that said round head (3,20) has a portion of surface (21c), said seat (17) of said superstructure (1) comprising a portion of surface (22a) which enters into contact with the corresponding portion of surface (6a) of the device (5), a portion of surface (22b) on which the corresponding portion of surface (6b) of said device (5) is engaged, and a portion of surface (22c) which rests on the corresponding portion of surface (21c) of the round head (3,20).

10. A dental prosthesis **characterized in that** it is assembled on the implant (2,25) by means of the device according to one or more of the previous claims.
